# EUROPÄISCHE PATENTSCHRIFT

(11) **EP 2 556 344 B1**
(45) Veröffentlichungstag und Bekanntmachung des Hinweises auf die Patenterteilung: **17.08.2016**
(21) Anmeldenummer: 10715690.3
(22) Anmeldetag: 09.04.2010
(51) Int. Cl.: G01D 5/48

(54) **SYSTEM ZUR BEDÄMPFUNG DER REFLEXIONSWELLE AM OFFENEN ENDE EINES MAGNETOSTRIKTIVEN SENSORSYSTEMS**
SYSTEM FOR DAMPING THE REFLECTION WAVE AT THE OPEN END OF A MAGNETOSTRICTIVE SENSOR SYSTEM
SYSTÈME D'ATTÉNUATION DE L'ONDE DE RÉFLEXION À L'EXTRÉMITÉ OUVERTE D'UN SYSTÈME DE CAPTEURS MAGNÉTOSTRICTIF

(43) Veröffentlichungstag der Anmeldung: 13.02.2013
(73) Patentinhaber: Hydac Electronic GmbH, 66128 Saarbrücken (DE)
(72) Erfinder: HEUCKELBACH, Rainer, 58513 Lüdenscheid (DE); MORSCH, Joachim, 66646 Marpingen (DE)
(74) Vertreter: Bartels, Martin Erich Arthur
(86) Internationale Anmeldenummer: PCT/EP2010/002231
(87) Internationale Veröffentlichungsnummer: WO 2011/124238

(56) Entgegenhaltungen:
- EP-A2- 0 921 373
- DE-A1- 10 348 195
- US-A- 5 590 091

## Beschreibung

Die Erfindung betrifft ein System zur Bedämpfung der Reflexionswelle am offenen Ende eines magnetostriktiven Sensorsystems gemäß der Merkmalsausgestaltung des Oberbegriffes des Patentanspruches 1.

Magnetostriktive Sensorsysteme sind bekannt. Sie werden auf verschiedenen Gebieten als Wegmesssystem oder zur Positionsermittlung eingesetzt. Kernstück derartiger Systeme ist der Messdraht, der aus einer speziellen Metalllegierung besteht und einen Wellenleiter bildet. Als Messsignal wird auf diesem Wellenleiter eine Körperschallwelle erzeugt. Diese entsteht durch das Zusammenspiel zwischen einem Permanentmagneten, der als Positionsgeber entlang des Messdrahtes bewegbar ist, und einem Stromimpuls im Messdraht. Auf diese Weise wird die Körperschallwelle als mechanischer Impuls erzeugt, welcher sich als torsionale und longitudinale Welle vom Entstehungsort am Magneten ausgehend in beiden Richtungen auf dem Wellenleiter ausbreitet. Durch Messung der Laufzeit dieser Welle vom Entstehungsort am Magneten bis zu einem Signalabgriff, der einen Signalwandler bildet, ist die Position des Magneten entlang der durch den Messdraht gebildeten Messstrecke ermittelbar.

Beim Messvorgang entsteht an den Enden des Wellenleiters eine Reflexion der Welle. Da diese Reflexion den eigentlichen Messvorgang stört, muss sie durch ein Dämpfungssystem bedämpft werden. Diesbezüglich ist es Stand der Technik, das offene Ende mit einem Dämpfungsteil aus einem Dämpfungsmaterial zu versehen, beispielsweise einem Weichstoff wie synthetischem Kautschuk, Polyurethan oder einem anderen zähelastischen Material. Die Anbringung derartiger Materialien gestaltet sich verhältnismäßig aufwendig. Um dem zu begegnen, ist bei einem in der DE 103 48 195 A1 offenbarten Bedämpfungssystem der Eingangs genannten Art vorgesehen, das für den Montagevorgang zunächst ein schlauchförmiges Dämpfungsglied benutzt wird, das einen aufgeweiteten Ausgangszustand besitzt, in den es bequem auf den Messdraht aufschiebbar ist und dass das Dämpfungsglied sodann mittels einer hülsenartigen Einfassung derart verklemmbar ist, dass es auf den Messdraht eine Klemmkraft ausübt und dadurch auf dem Messdraht festgelegt ist.

Während sich der Montage- und Herstellungsvorgang auf diese Weise vereinfacht, weil schlauchförmiges Dämpfungsglied und Einfassung in jeweils losem, nicht klemmendem Zustand, d. h. einfach und bequem, gemeinsam auf den Messdraht aufgesteckt werden können, wonach durch Formänderung der Einfassung die Klemmkraft auf den Dämpfungsteil aufgebracht wird, um diesen mit dem Messdraht zu verklemmen, ist bei dem bekannten System keine optimale Dämpfungswirkung erzielbar.
Aus der EP 0 921 373 A2, insbesondere aus deren Figur 11b ist ein gattungsgemäßes System in Form einer Lagerung für Wellenleiter zur Fortleitung mechanischer Wellen bekannt. Die bekannte Lösung betrifft auch Verfahren zur Herstellung dahingehender Lagerungen. Die bekannte Lagerung von Wellenleitern dient der Fortleitung mechanischer Wellen und kommt insbesondere in Positionssensoren zur Anwendung, die nach dem Laufzeitprinzip mechanischer Wellen arbeiten. Die Lagerung weist einen hohen Anteil Gas und einen niedrigen Anteil Feststoff auf, und das diesbezügliche Herstellverfahren umfasst das Fertigen der Lagerung an einer Hilfsseele, das Verbinden der Hilfsseele mit dem Wellenleiter, und ein axiales Herausziehen der Hilfsseele aus der Lagerung, wobei der Wellenleiter in die Lagerung eingezogen wird.

Die Erfindung stellt sich, ausgehend von diesem Stand der Technik, die Aufgabe, ein Bedämpfungssystem zur Verfügung zu stellen, das, unter Beibehaltung der Vorteile der einfachen und kostengünstigen Herstellung, sich durch eine verbesserte Dämpfungswirkung auszeichnet.

Erfindungsgemäß ist diese Aufgabe durch ein System gelöst, das die Merkmale des Patentanspruches 1 in seiner Gesamtheit aufweist.

Gemäß dem kennzeichnenden Teil des Patentanspruches 1 ist vorgesehen,
- dass sich auf dem schlauchartigen Dämpfungsteil die hülsenartige Einfassung befindet,
- dass die hülsenartige Einfassung von ihrem der Signaleinrichtung benachbarten Ende ausgehend in Richtung auf das andere Ende hin zunehmend stärker verengt ist,
- so dass das schlauchartige Dämpfungsglied gleichfalls über die gesamte Länge zu einem konischen Verlauf gepresst ist,
- dass zumindest der konische Verlauf der hülsenartigen Einfassung stetig und unterbrechungsfrei ist,
- dass sich das schlauchartige Dämpfungsglied über die beiden Enden der hülsenartigen Einfassung hinaus erstreckt, und
- dass der Messdraht sich an beiden Enden der hülsenartigen Einfassung aus dem jeweiligen Ende des schlauchartigen Dämpfungsgliedes heraus nach außen erstreckt.

Demgegenüber ist bei der bekannten Lösung DE 103 48 195 A1 die hülsenartige Einfassung an axial zueinander versetzten Stellen radial zusammengepresst, so dass einzelne Klemmstellen gebildet sind, wobei die Eindringtiefe in das schlauchartige Dämpfungsglied von Klemmstelle zu Klemmstelle zunehmend gewählt ist, um in Richtung auf das freie Ende des Messdrahtes eine zunehmende Dämpfungswirkung zu erzielen. Die absatzweise Änderung der Dämpfungswirkung ist nachteilig. Insbesondere ist hierbei die Gesamtdämpfungswirkung kaum oder nicht reproduzierbar. Im Gegensatz hierzu führt der stetige, konische Verlauf der Einfassung zu einer entsprechend konischen Verformung des schlauchartigen Dämpfungsgliedes, so dass dessen Verdichtung nicht sprunghaft, sondern über die Länge gleichmäßig zunimmt und somit ein kontinuierlich ansteigender Dämpfungsgrad realisiert ist. Durch Wahl des Grades der Konizität und der Länge der hülsenartigen Einfassung ist hierbei in sehr gut reproduzierbarer Weise eine optimale Dämpfung erreichbar.

Die Konizität von hülsenartiger Einfassung und Dämpfungsglied sind im wesentlichen gleich. Dadurch ist ein besonders gleichmäßig ansteigender Dämpfungsgrad erreichbar.

Dadurch, dass erfindungsgemäß die Anordnung so getroffen ist, dass sich das schlauchartige Dämpfungsglied über die beiden Enden der hülsenartigen Einfassung hinaus erstreckt und dass sich der Messdraht insbesondere an beiden Enden der hülsenartigen Einfassung aus dem jeweiligen Ende des schlauchartigen Dämpfungsgliedes heraus nach außen erstreckt, ist der Messdraht auch am offenen Ende elektrisch kontaktierbar.

In besonders vorteilhafter Weise kann eine Einfassung in Form einer metallischen Hülse vorgesehen sein, die durch plastische, mechanische Verformung verengbar ist. Die Hülse kann zusammen mit dem das Dämpfungsteil bildenden Schlauchstück lose über den Messdraht geschoben werden und anschließend kontrolliert deformiert werden, um die Klemmkraft auf das Schlauchstück auszuüben. Anstelle einer Deformation der Hülse durch mechanische Kräfte kann eine Hülse aus einem Memorymetall eingesetzt werden, wobei die Hülse im Montagezustand geweitet ist und durch Erwärmen eine enge Form annimmt.

Bei einer mechanisch verformbaren metallischen Hülse kann die Hülse im verengten Funktionszustand mindestens einen Längswulst aufweisen, der durch Aneinanderlegen eines Streifens der Hülsenwand gebildet ist, wobei zwei einander diametral gegenüberliegende Längswulste gebildet werden können.

Das Dämpfungsglied kann durch einen Schlauch aus einem Weichstoff gebildet sein, beispielsweise durch einen Schlauch aus einem Silikonkautschuk.

Nachstehend ist die Erfindung anhand eines in der Zeichnung dargestellten Ausführungsbeispieles im Einzelnen erläutert. Es zeigen:
- Fig. 1: eine lediglich diagrammartig gezeichnete Darstellung zur Erläuterung der Funktionsweise eines magnetostriktiven Sensorsystems;
- Fig. 2: eine gegenüber einer praktischen Ausführungsform näherungsweise um den Faktor 4 vergrößert gezeichnete perspektivische Schrägansicht eines Ausführungsbeispiels des erfindungsgemäßen Dämpfungssystems;
- Fig. 3, 4 und 5: eine Draufsicht bzw. Seitenansicht bzw. Frontansicht des Ausführungsbeispiels von Fig. 2 und
- Fig. 6: einen gegenüber Fig. 4 noch stärker vergrößert und nicht maßstäblich gezeichneten Längsschnitt des Ausführungsbeispieles.

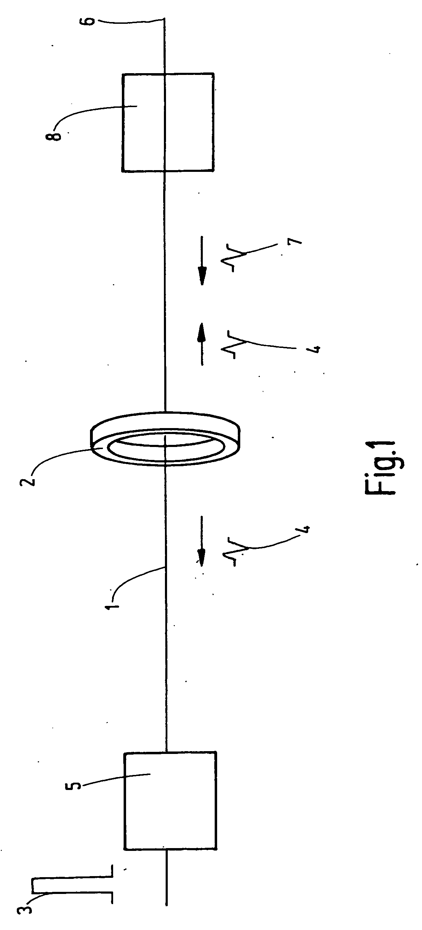

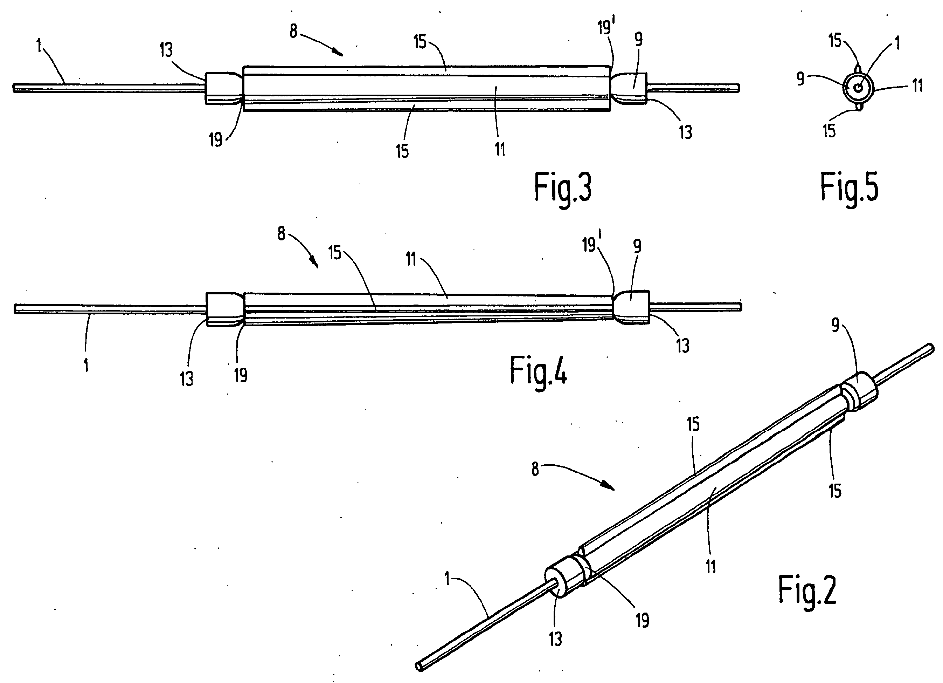

In Fig. 1 ist ein als Wellenleiter dienender Messdraht mit 1 bezeichnet, der aus einer ferromagnetischen Metalllegierung gebildet ist. Als Positionsgeber ist ein Permanentmagnet 2 längs des Messdrahtes 1 verfahrbar. Der Magnet 2 erzeugt aufgrund eines im Messdraht 1 generierten Stromimpulses 3 ein Messsignal in Form einer vom Entstehungsort am Magneten 2 ausgehenden Körperschallwelle 4, die sich auf dem Messdraht 1 in beiden Richtungen ausbreitet. Zur Positionsbestimmung des Magneten 2 wird die Laufzeit der Welle 4 bis zu einem Signalabgriff gemessen, wo ein Signalwandler 5 vorgesehen ist, dessen Signal von einer nicht gezeigten Signaleinrichtung ausgewertet wird. Wie in Fig. 1 angedeutet, erzeugt die signalgebende Körperschallwelle 4 eine Reflexionswelle 7. Um deren störende Beeinflussung des Messergebnisses zu beheben, ist am offenen Ende 6 des Systems ein Dämpfungssystem 8 angeordnet, das anhand der Fig. 2 bis 6 näher beschrieben ist.

Fig. 2 bis 6 zeigen ein Ausführungsbeispiel des Bedämpfungssystems 8, bei dem ein Längenabschnitt eines Schlauches 9 aus Silikonkautschuk auf dem Messdraht 1 festgeklemmt ist. Zu diesem Zweck befindet sich auf dem Schlauch 9 eine Metallhülse 11 in Form einer geschlossenen, im Ausgangszustand hohlzylindrischen Hülse, die sich zwischen ihren Enden 19 und 19' durchgehend bis in die Nähe der beiden Enden 13 des Schlauches 9 erstreckt. In den Fig. 2 bis 6 ist die Hülse 11 in gegenüber dem Ausgangszustand verformtem Funktionszustand dargestellt, in dem die Hülse 11 so verklemmt ist, dass an einander diametral gegenüberliegenden Stellen jeweils ein Längswulst 15 gebildet ist, der sich über die Hülsenlänge durchgehend erstreckt. Diese Verformung verengt die Hülse 11 in dem Maße, dass eine Klemmkraft auf den Schlauch 9 ausgeübt wird, die diesen auf dem Messdraht 1 verklemmt.

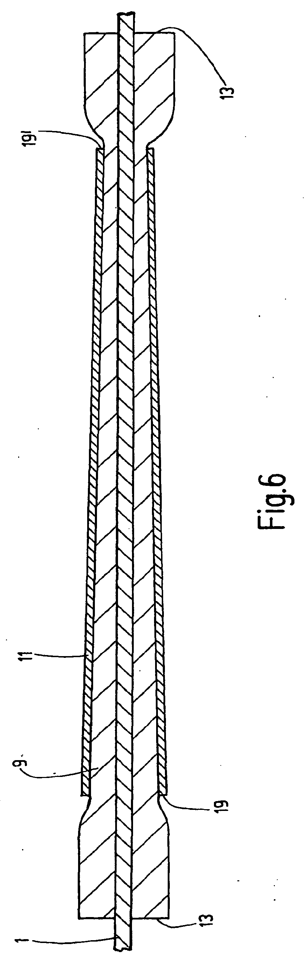

Wie aus Fig. 4 und 6 erkennbar ist, ist die Hülse 11 im Funktionszustand derart verpresst, dass am einen Ende 19, beim vorliegenden Beispiel dem der Signaleinrichtung 5 nächstgelegenen Ende 19, die Hülse 11 einen größeren Durchmesser als am anderen Ende 19' besitzt, das dem offenen Ende 6 des Systems benachbart ist. Dadurch ist der innere Schlauch 9 derart verpresst, dass er eine leicht konische Gestalt annimmt. Durch über die Länge unterschiedlich starkes Verpressen des Schlauches 9 ist eine Varianz des Dämpfungsgrades des Dämpfungsteiles 8 erreichbar. Anstelle der in Fig. 4 gezeigten konischen Verlaufsform des Schlauches 9 in der Fig. 4 von links nach rechts, könnte die Konizität, je nach den Systemeigenschaften, umgekehrt sein.

Wie am deutlichsten der Fig. 6 entnehmbar ist, ist die Metallhülse 11 in dem gezeigten Funktionszustand derart verformt, dass sie über ihre gesamte Länge einen konischen Verlauf besitzt, wobei die Konizität stetig, d. h. unterbrechungsfrei ist. Dadurch ist der das Dämpfungsglied bildende Schlauch 9 von dem der Signaleinrichtung 5 benachbarten Ende ausgehend und zum freien Ende des Messdrahtes 1 hin zunehmend verpresst, so dass das Material des Schlauches 9 in stetiger Zunahme verdichtet wird, wodurch wiederum der Dämpfungsgrad über die Länge der Hülse 11 hin zunehmend in kontinuierlicher Weise ansteigt.

Bei dem gezeigten Ausführungsbeispiel ist die metallische Hülse 11 in der Weise verpresst, dass seitliche Längswülste 15 gebildet sind. Ebenso könnte die konische Verengung durch andere Maßnahmen bewirkt sein oder es könnte, wie bereits erwähnt, eine Einfassung aus einem Memorywerkstoff vorgesehen sein, der durch Erwärmen eine verengte Form annimmt.

## Patentansprüche

1. System zur Bedämpfung der Reflexionswelle am offenen Ende (6) eines magnetostriktiven Sensorsystems, das mindestens eine Magneteinrichtung (2) aufweist, die relativ zu einem mechanisch auslenkbaren Messdraht (1) verfahrbar ist, der unter Einwirkung eines Stromimpulses (3) eine Auslenkung erfährt, die von einer Signaleinrichtung (5) bearbeitbar ist, wobei das System mindestens ein am offenen Ende (6) am Messdraht (1) anliegendes Dämpfungsteil (8) mit einem schlauchförmigen Dämpfungsglied (9) aufweist, das mittels einer hülsenartigen Einfassung (11) mit dem Messdraht (1) verklemmbar ist, wobei die hülsenartige Einfassung (11) aus einem für das Anbringen am Dämpfungsglied (9) vorgesehenen, geweiteten Ausgangszustand in einen verengten, eine Klemmkraft auf das Dämpfungsglied (9) ausübenden Funktionszustand verformbar ist, **dadurch gekennzeichnet,**
- **dass** sich auf dem schlauchartigen Dämpfungsteil (9) die hülsenartige Einfassung (11) befindet,
- **dass** die hülsenartige Einfassung (11) von ihrem der Signaleinrichtung (5) benachbarten Ende (19) ausgehend in Richtung auf das andere Ende (19') hin zunehmend stärker verengt ist,
- so dass das schlauchartige Dämpfungsglied (9) gleichfalls über die gesamte Länge der hülsenartigen Einfassung (11) zu einem konischen Verlauf gepresst ist,
- **dass** zumindest der konische Verlauf der hülsenartigen Einfassung (11) stetig und unterbrechungsfrei ist,
- **dass** sich das schlauchartige Dämpfungsglied (9) über die beiden Enden (19 und 19') der hülsenartigen Einfassung (11) hinaus erstreckt, und
**dass** der Messdraht (1) sich an beiden Enden (19 und 19') der hülsenartigen Einfassung (11) aus dem jeweiligen Ende (13) des schlauchartigen Dämpfungsgliedes (9) heraus nach außen erstreckt.

2. System nach Anspruch 1 , **dadurch gekennzeichnet, dass** die hülsenartige Einfassung in Form einer metallischen Hülse (11) vorgesehen ist, die durch plastische mechanische Verformung verengbar ist.

3. System nach Anspruch 1 oder 2, **dadurch gekennzeichnet, dass** die Hülse (11) im verengten Funktionszustand mindestens einen Längswulst (15) aufweist, der durch Aneinanderlegen eines Streifens der Hülsenwand gebildet ist.

4. System nach Anspruch 3, **dadurch gekennzeichnet, dass** zwei diametral einander gegenüberliegende Längswulste (15) gebildet sind.

5. System nach Anspruch 4, **dadurch gekennzeichnet, dass** die jeweiligen Längswulste (15) sich über die ganze Länge der Hülse (11) erstrecken.

6. System nach einem der Ansprüche 1 bis 5, **dadurch gekennzeichnet, dass** das Dämpfungsglied durch einen Schlauch (9) aus einem Weichstoff gebildet ist.

7. System nach Anspruch 6, **dadurch gekennzeichnet, dass** ein Schlauch (9) aus Silikonkautschuk vorgesehen ist.

## Claims

1. System for damping the reflected wave at the open end (6) of a magnetostrictive sensor system, comprising at least one magnetic device (2) which can be moved relative to a measuring wire (1) that can be deflected mechanically and undergoes a deflection when a current pulse (3) is applied, which deflection can be processed by a signal device (5), the system comprising at least one damping part (8) which rests against the measuring wire (1) at the open end (6) thereof and has a tubular damping element (9) which can be clamped to the measuring wire (1) by means of a sleeve-like enclosure (11), the sleeve-like enclosure (11) being deformable from an expanded initial state, provided for attaching said enclosure to the damping element (9), into a constricted functional state that exerts a clamping force on the damping element (9), **characterised in that**
- the sleeve-like enclosure (11) is located on the tubular damping part (9),
- the sleeve-like enclosure (11) is constricted with increasing intensity from the end (19) thereof adjacent to the signal device (5) towards the other end (19'),
- and therefore the tubular damping element (9) is likewise pressed into a conical contour over the entire length of the sleeve-like enclosure (11),
- at least the conical contour of the sleeve-like enclosure (11) is continuous and unbroken,
- the tubular damping element (9) extends beyond the two ends (19 and 19') of the sleeve-like enclosure (11), and
the measuring wire (1) extends outwardly from each end (13) of the tubular damping element (9) at both ends of the sleeve-like enclosure (11).

2. System according to claim 1, **characterised in that** the sleeve-like enclosure (11) is provided in the form of a metal sleeve (11) which can be constricted by plastic mechanical deformation.

3. System according to either claim 1 or claim 2, **characterised in that** the sleeve (11) in the constricted functional state has at least one longitudinal bead (15) which is formed by butt-jointing a strip of the sleeve wall.

4. System according to claim 3, **characterised in that** two diametrically opposed longitudinal beads (15) are formed.

5. System according to claim 4, **characterised in that** the respective longitudinal beads (15) extend over the entire length of the sleeve (11).

6. System according to any of claims 1 to 5, **characterised in that** the damping element is formed by a tube (9) made of a soft material.

7. System according to claim 6, **characterised in that** a tube (9) made of a silicone rubber is provided.

## Revendications

1. Système d'amortissement de l'onde de réflexion à l'extrémité (6) ouverte d'un système de capteur magnétostrictif, qui a au moins un dispositif (2) magnétique, qui peut être déplacé par rapport à un fil (1) métallique de mesure, qui peut être dévié mécaniquement et qui subit, sous l'effet d'une impulsion (3) de courant, une déviation pouvant être traitée par un dispositif (5) de signal, le système ayant au moins une partie (8) d'amortissement s'appliquant au fil (1) de mesure à l'extrémité (6) ouverte et ayant un élément (9) d'amortissement tubulaire, qui peut être serré avec le fil (1) de mesure au moyen d'une garniture (11) de type douille, la garniture (11) de type douille pouvant être déformée à partir d'un état initial élargi prévu pour mettre l'élément (9) d'amortissement en un état fonctionnel appliquant une force de serrage à l'élément (9) d'amortissement, **caractérisé**
- **en ce que** la garniture (11) de type douille se trouve sur la partie (9) tubulaire d'amortissement,
- **en ce que** la garniture (11) de type douille se rétrécit de plus en plus de son extrémité (19) voisine du dispositif (5) de signal à l'autre extrémité (19'),
- de sorte que l'élément (9) tubulaire d'amortissement est pressé en un tracé conique de la même façon sur toute la longueur de la garniture (11) de type douille,
- **en ce qu'**au moins le tracé conique de la garniture (11) de type douille est constant et sans interruption,
- **en ce que** l'élément (9) tubulaire d'amortissement s'étend au-delà des deux extrémités (19 et 19') de la garniture (11) de type douille et
- **en ce que** le fil (1) de mesure s'étend vers l'extérieur aux deux extrémités (19 et 19') de la garniture (11) de type douille hors de l'extrémité (13) respective de l'élément (19) tubulaire d'amortissement.

2. Système suivant la revendication 1, **caractérisé en ce que** la garniture de type douille est prévue sous la forme d'une douille (11) métallique, qui peut se rétrécir par déformation mécanique plastique.

3. Système suivant la revendication 1 ou 2, **caractérisé en ce que** la douille (1) a, dans l'état fonctionnel rétréci, au moins un bourrelet longitudinal, qui est formé par juxtaposition d'une bande de la paroi de la douille.

4. Système suivant la revendication 3, **caractérisé en ce qu'**il est formé deux bourrelets (15) longitudinaux opposés diamétralement l'un à l'autre.

5. Système suivant la revendication 4, **caractérisé en ce que** les bourrelets (15) longitudinaux respectifs s'étendent sur toute la longueur de la douille (11).

6. Système suivant l'une des revendications 1 à 5, **caractérisé en ce que** l'élément d'amortissement est formé par une gaine (9) en une matière souple.

7. Système suivant la revendication 6, **caractérisé en ce qu'**il est prévu une gaine (9) en caoutchouc de silicone.
